# EUROPÄISCHE PATENTSCHRIFT

(11) **EP 0 449 905 B1**
(45) Veröffentlichungstag und Bekanntmachung des Hinweises auf die Patenterteilung: **29.09.1993**
(21) Anmeldenummer: 90900790.8
(22) Anmeldetag: 18.12.1989
(51) Int. Cl.: G05D 5/03, D04H 1/74

(54) **VERFAHREN ZUM ERFASSEN UND AUSGLEICHEN VON LEGEFEHLERN BEIM HERSTELLEN EINER BAHN EINES MEHRLAGIGEN VLIESES**
PROCESS FOR DETECTING AND CORRECTING FOLDING ERRORS DURING THE MANUFACTURE OF A WEB OF MULTI-LAYER NON-WOVEN FABRIC
PROCEDE DE DETECTION ET DE CORRECTION D'ERREURS DE PLIAGE LORS DE LA PRODUCTION D'UNE BANDE DE NON-TISSE A COUCHES MULTIPLES

(30) Priorität: 22.12.1988 DE 3843180
(43) Veröffentlichungstag der Anmeldung: 09.10.1991
(73) Patentinhaber: Erhardt, Dietmar, D-72218 Wildberg (DE)
(72) Erfinder: Erhardt, Dietmar, D-72218 Wildberg (DE)
(74) Vertreter: Twelmeier, Ulrich, Dipl.Phys.
(86) Internationale Anmeldenummer: EP8901555
(87) Internationale Veröffentlichungsnummer: WO9007148

(56) Entgegenhaltungen:
- EP-A- 0 231 618
- DE-A- 3 501 897
- US-A- 3 557 351
- US-A- 4 766 649

## Beschreibung

### Technisches Gebiet

Die Erfindung geht aus von einem Verfahren zum Erfassen und Ausgleichen von Legefehlern beim Herstellen einer Bahn eines mehrlagigen Vlieses mittels einer Legemaschine, in welcher eine Bahn eines einlagigen Vlieses einem Förderband (nachfolgend als Abzugsband bezeichnet) quer zu dessen Laufrichtung zugeführt und hin- und hergehend darauf abgelegt wird, so dass eine mehrlagige Bahn gebildet wird, wobei die Dicke des mehrlagigen Vlieses und/oder seine Masse pro Flächeneinheit fortlaufend gemessen werden.

Das Verfahren kommt zur Anwendung in einer Legemaschine mit einem Förderband zum Zuführen einer Bahn eines einlagigen Vlieses, welches an seinem vorderen Ende um eine Walze - nachfolgend als Ablegewalze bezeichnet - umgelenkt ist, mit einem Motor zum Antreiben des Förderbandes, mit einem Verschiebeantrieb zum hin- und hergehenden Verschieben der Ablegewalze in bzw. entgegen der Förderrichtung des Förderbandes, mit einem unterhalb der-Ablegewalze angeordneten und quer zum Förderband verlaufenden Abzugsband, mit einem Motor zum Antreiben des Abzugsbandes und mit einer Meßeinrichtung zur Messung der Dicke und/oder der Masse pro Flächeneinheit der mehrlagigen Vliesbahn.

In einer solchen Legemaschine wird eine Bahn eines einlagigen Vlieses durch ein Förderband einem darunter angeordneten, quer dazu verlaufenden Abzugsband zugeführt. Das vordere Ende des Förderbandes führt eine changierende, d.h. hin und hergehende Bewegung aus, und nach jeder Bewegungsumkehr der Ablegewalze wird das einlagige Vlies so auf dem Abzugsband abgelegt, dass es die darauf vor der Bewegungsumkehr der Ablegewalze abgelegte Lage des Vlieses teilweise überlappt. Der Grad der Überlappung hängt ab von der Geschwindigkeit, mit der die Bahn des einlagigen Vlieses zugeführt und abgelegt wird, von der Geschwindigkeit, mit welcher das Abzugsband läuft, von der Breite des zugeführten Vlieses sowie von der Breite des mehrlagig abgelegten Vlieses, welche ihrerseits durch die Länge des-Weges bestimmt ist, welcher die Ablegewalze während ihrer Vor- bzw. Zurückbewegung überstreicht. Weil das Abzugsband quer zum Förderband und quer zur Ablegewalze bewegt wird, wird das Vlies in sich schräg überlappenden Bahnen mehrlagig auf dem Abzugsband abgelegt. Durch Variation der Breite der zugeführten Vliesbahn, der Ablegegeschwindigkeit, der Abzugsgeschwindigkeit und der Auslenkung der Ablegewalze können die Anzahl der Lagen und die Breite der entstehenden mehrlagigen Vliesbahn nach Wahl geändert werden. Dabei kann es durch fehlerhafte Einstellungen vorkommen, dass die Lagen nicht lückenlos aneinander anstoßen bzw. mit kontrolliertem, vorgegebenem Abstand gelegt werden. Es kann zu einer "Unterlappung" kommen, bei der das Abzugsband relativ zu schnell bewegt wird und zwischen den einzelnen Bahnen Lücken entstehen. Umgekehrt kommt es dann, wenn das Abzugsband relativ zu langsam läuft, zu einer "Überlappung", bei der.benachbarte Lagen noch aufeinander gelegt werden.

Wenn man eine mehrlagige Bahn haben will, die gleichmässig dick und dicht ist, dann darf es weder zu einer Überlappung noch zu einer Unterlappung kommen, sondern die Einstellung der Legemaschine muss so getroffen werden, dass die Lagen des Vlieses beim Ablegen des zugeführten einlagigen Vlieses exakt gestoßen werden. Solche Bahnen aus einem mehrlagigen Vlies, aufgebracht auf ein textiles Grundgewege, werden in Papiermaschinen zur Bespannung von Walzen in der Pressenpartie und der Trockenpartie der Papiermaschine benötigt, und um eine gleichmässige Papierbahn herzustellen, ist eine Bespannung der Walzen mit gleichmässig dickem und dichtem Vlies oder Filz ausserordentlich wichtig. Kommt in einer Papiermaschine ein Vlies oder Filz zur Anwendung, der nicht gleichmässig dick und dicht ist, kann der Schaden sehr hoch sein. Die Papierhersteller stellen deshalb strenge Anforderungen an die Qualität der Vliese bzw. Filze und vereinbaren mit den Lieferanten der Vliese bzw. Filze in der Regel hohe Vertragsstrafen für den Fall der Lieferung von fehlerhaften Vliesen bzw. Filzen.

Beim Hersteller der Vliese stellt sich deshalb das Problem, die Dicke und Dichte der Vliese zu überwachen.

### Stand der Technik

Aus der DE-30 01 980 C2 ist es bekannt, die Dicke und das Flächengewicht von endlosen Papiermaschinenfilzen automatisch zu messen und zu kontrollieren und die Meßwerte z.B. auf einem Bildschirm darzustellen, auszudrucken oder durch einen Plotter graphisch darstellen zu lassen. Das Bedienungspersonal der Legemaschine versucht daraus die vermutlich optimale Einstellung der Legemaschine abzuschätzen und dementsprechend die erforderlichen Nachstellungen an der Legemaschine vorzunehmen. Dies wird wiederholt durchgeführt, so dass man sich allmählich durch wiederholtes Nachstellen und anschließende Kontrolle an die optimale Einstellung der Maschine herantastet. Das erfordert viel Erfahrung und ist sehr zeitaufwendig, ohne den gewünschten Erfolg, ein fehlerfreies mehrlagiges Vlies zu produzieren, zu garantieren.

Aus der US-A-3,557,351 ist es bekannt, bei der Herstellung von Papier oder Kunststoffolien die Dicke einer Bahn zu messen und mit Hilfe des Meßsignals auf einen konstanten Wert zu regeln. Dabei werden periodische Schwankungen des Meßsignals zunächst unterdrückt, damit sie den Regelvorgang nicht beeinflussen. Erst ein von den periodischen Schwankungen befreites Signal wird für die Regelung herangezogen.

### Darstellung der Erfindung

Der Erfindung liegt die Aufgabe zugrunde, ein Verfahren zum Erfassen und Ausgleichen von Legefehlern beim Herstellen einer Bahn eines mehrlagigen Vlieses anzugeben, welches sich automatisieren läßt und mit weniger Aufwand und größerer Sicherheit als bisher zum Herstellen eines fehlerfreien Vlieses führt.

Diese Aufgabe wird gelöst durch ein Verfahren mit den im Anspruch 1 angegebenen Merkmalen. Eine zum Durchführen des erfindungsgemäßen Verfahrens besonders geeignete Legemaschine ist Gegenstand des Anspruchs 7. Vorteilhafte Weiterbildungen der Erfindung sind Gegenstand der Unteransprüche.

Die Erfindung macht sich die Tatsache zunutze, dass die Legefehler mit einer gewissen Periodizität auftreten. Überwacht man die Dicke und/oder die Masse pro Flächeneinheit des mehrlagigen Vlieses fortlaufend mit Hilfe einer Meßeinrichtung, so wäre das ideale Meßsignal für einen homogenen, gleichmässig dicken und dichten Vlies ein Signal mit konstanter Amplitude. Eine Überlappung oder eine Unterlappung hätte eine entsprechende periodische Änderung des Meßsignales zur Folge. Tatsächlich ist ein Vlies aber nicht homogen. Das führt dazu, dass das Meßsignal vor allem aufgrund von Schwankungen der Dicke und der Masse pro Flächeneinheit, welche bereits das Ausgangsmaterial, die aus einem einlagigen Vlies bestehende Bahn, aufweist, stark verrauscht ist. Dem Bedienungspersonal einer Legemaschine wäre es deshalb nicht möglich, aus einem solchen fortlaufend gewonnenen Meßsignal unmittelbar Rückschlüsse auf die Qualität des mehrlagigen Vlieses zu ziehen. Die im Meßsignal enthaltenen periodischen Störungen können erfindungsgemäß jedoch durch maschinelle Analyse des Meßsignals ermittelt und ausgewertet werden, insbesondere durch eine rechnergestützte Analyse. Die ermittelten periodischen Störungen werden dann durch eine Regelung minimiert, d.h. sie werden als Regelgröße in einem Regelkreis verwendet, in welchem als Stellgröße die Geschwindigkeit des Förderbandes und/oder die Geschwindigkeit, mit der die einlagige Vliesbahn zugeführt wird, und/oder die Breite, in welcher die einlagige Vliesbahn zugeführt wird, und/oder die Breite, in der die einlagige Vliesbahn auf dem Förderband abgelegt wird, beeinflußt wird. Auf diese Weise ist eine automatisch ablaufende, von der Erfahrung und dem Geschick des Bedienungspersonals der Legemaschine unabhängige Regelung der Dicke und Masse pro Flächeneinheit des mehrlagigen Vlieses möglich.

Die periodischen Störungen im Meßsignal sind dann besonders einfach zu erkennen, wenn das Meßsignal nach Frequenzen analysiert, insbesondere einer Fouriertransformation unterworfen wird, wodurch man anstelle eines zeitkontinuierlichen Signales ein Spektrum, bei der mit einem Rechner durchzuführenden Fouriertransformation ein Linienspektrum, erhält, in welchem die von Legefehlern herrührenden Signalanteile dadurch erkennbar sind, dass es bei den Frequenzen, die zur Periodizität der Legefehler gehören, Spektrallinien enthält, deren Amplitude auffällig aus dem Rauschanteil des Spektrums hervorsticht. Das erfindungsgemäße Verfahren geht dann dahin, diese auffällig stark vertretenen Frequenzen im Spektrum durch Regelung der Einstellparameter der Legemaschine zu minimieren.

Die Erkennung der Legefehler im Spektrum kann noch dadurch erleichert werden, dass man hohe Frequenzen aus dem Meßsignal vor der Fouriertransformation durch ein Tiefpaßfilter ausfiltert. Auf diese Weise läßt sich der Rauschanteil im Meßsignal weitgehend unterdrücken, denn während der Rauschanteil überwiegend höherfrequent ist, sind die durch Fehleinstellungen der Legemaschine bedingten Anteile des Meßsignals überwiegend niederfrequent. Die hohen Frequenzen können jedoch auch rechnerisch unberücksichtigt bleiben.

Eine Tiefpaßfilterung kann mit Vorteil auch eingesetzt werden, wenn das Meßsignal keiner Fouriertransformation unterzogen wird. Schon im nicht transformierten Meßsignal treten die von Legefehlern herrührenden periodischen Störungen nach einer Tiefpaßfilterung deutlich in Erscheinung, so dass sie durch Regelung minimiert werden können.

Prinzipiell genügt es, die Dicke und/oder die Masse pro Flächeneinheit des mehrlagigen Vlieses durch eine Meßeinrichtung erfassen zu lassen, welche die abgezogene Bahn fortlaufend überwacht. Die Zuverlässigkeit der Uberwachung und Regelung der Legemaschine kann aber dadurch verbessert werden, dass man mehrere Meßeinrichtungen vorsieht, welche so angeordnet werden, dass sie den Vlies - bezogen auf dessen Laufrichtung - an mehreren Stellen nebeneinander zugleich beobachten und seine Dicke messen. Durch die Regelung versucht man dann in jedem der Meßsignale die auffälligen, von Legefehlern herrührenden Frequenzen in ihrer Amplitutde zu minimieren.

### Wege zur Ausführung der Erfindung

Zwei bevorzugte Ausführungsbeispiele der Erfindung werden nachstehend anhand der beigefügten schematischen Zeichnungen erläutert.
- Figur 1: zeigt in einer Schrägansicht das Abzugsband einer Legemaschine und das quer dazu verlaufende Förderband zum Zuführen eines Vlieses in ihrer gegenseitigen Zuordnung,
- Figur 2: zeigt die Anordnung aus Figur 1 in der Draufsicht,
- Figur 3: erläutert anhand einer Darstellung wie in Figur 2 das Entstehen von Legefehlern,
- Figur 4: zeigt das Abzugsband in einer Ansicht mit darüber angeordneter Meßeinrichtung zur Messung der Dicke und/oder der Masse pro Flächeneinheit des mehrlagigen Vlieses auf dem Abzugsband,
- Figur 4a: zeigt ein von einer solchen Meßeinrichtung geliefertes verrauschtes Meßsignal,
- Figur 4b: zeigt idealisiert das Meßsignal nach einer Tiefpaßfilterung,
- Figur 4c: zeigt das Meßsignal aus Figur 4a nach einer Fouriertransformation,
- Figur 5: zeigt in Blockdarstellung einen Regelkreis für ein Ausführungsbeispiel des erfindungsgemäßen Verfahrens, bei welchem das analoge Ausgangssignal einer Dickenmeßeinrichtung nach einer Tiefpaßfilterung analog ausgewertet wird,
- Figur 6: zeigt in einer Blockdarstellung einen Regelkreis, in welchem eine Ausführungsform des erfindungsgemäßen Verfahrens zur Anwendung kommt, bei der das analoge Ausangssignal einer Dickenmeßeinrichtung digitalisiert und einer Fouriertransformation unterworfen wird,
- Figur 7: zeigt ein Beispiel eines nach einer solchen Fouriertransformation erhaltenen Spektrums vor dem Ausregeln von Einstellungsfehlern der Legemaschine, und
- Figur 8: zeigt das Spektrum nach dem Ausregeln der Legefehler bei optimaler Einstellung der Legemaschine.

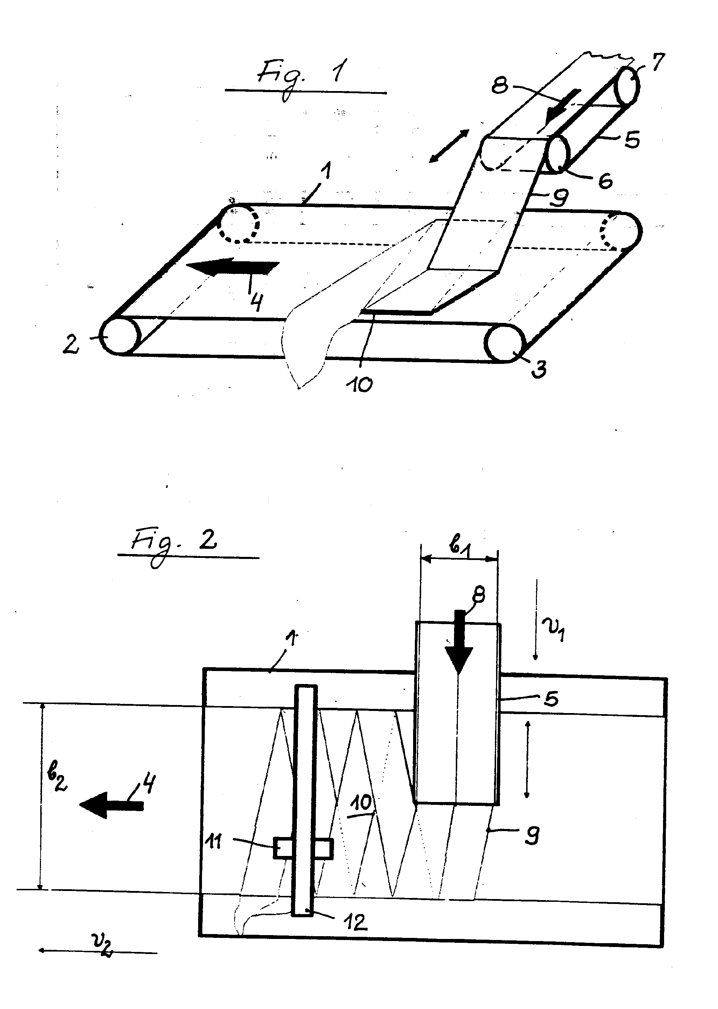

Die Figuren 1 und 2 zeigen als waagerechtes Abzugsband 1 ein endloses Förderband, welches um zwei Walzen 2 und 3 herumgeführt ist, von denen eine angetrieben ist. Das Obertrum des Abzugsbandes 1 bewegt sich in Richtung des Pfeiles 4. Oberhalb des Abzugsbandes 1 ist ein endloses Förderband 5 angeordnet, welches um zwei waagerecht angeordnete Walzen 6 und 7 herumgeführt ist. Die Laufrichtung des Obertrums dieses Förderbandes 5 ist durch den Pfeil 8 gekennzeichnet. Die Laufrichtung des Förderbandes 5 verläuft quer, im gezeichneten Beispiel im rechten Winkel zur Laufrichtung des Abzugsbandes 1. Die zum Förderband 5 gehörende vordere Walze 6 ist angetrieben und wird als Ablegewalze bezeichnet; sie ist oberhalb des Abzugsbandes 1 angeordnet und parallel zur Laufrichtung 8 des Förderbandes 5 hin und her verschiebbar. Diese Verschiebung kann beispielsweise mittels eines Druckmittelzylinders, mittels eines Spindeltriebes oder mittels einer Anordnung aus Zahnstange und Ritzel bewirkt werden. Der Weg, um den die Ablegewalze 6 vor oder zurückverschoben werden kann (nachfolgend als Hub bezeichnet) ist wählbar.

Das Förderband 5 dient zum Zuführen einer Bahn 9 aus einem einlagigen Vlies, welche auf dem Abzugsband 1 abgelegt wird. Während des Ablegevorganges wird die Ablegewalze 6 vor und zurückbewegt, wodurch die Bahn 9 sich schräg überlappend auf dem Abzugsband abgelegt wird. Der Grad der Überlappung hängt ab von der Breite b1 der Bahn 9, von der Geschwindigkeit vl, mit welcher die Bahn 9 zugeführt wird, dem Hub der Ablegewalze 6 und von der Geschwindigkeit v2, mit welcher das Abzugsband 1 umläuft. Der Hub der Abzugswalze 6 bestimmt die Breite b2 der abgezogenen, mehrlagigen Bahn 10 des Vlieses.

Für ein Vlies mit vier Doppellagen (acht Einzellagen) kann man mit den nachstehenden Zahlenwerten eine optimale Ablegung erreichen:
- v1 =: 40 m/min
- b1 =: 2 m
- b2 =: 7,5 m
- v2 =: 1,33 m/min.

Zur Uberwachung der Dicke und/oder der Masse pro Flächeneinheit der Bahn 10 ist oberhalb des Abzugsbandes 1 eine Meßeinrichtung vorgesehen, welche quer zur Laufrichtung 4 des Abzugsbandes längs einer Schiene 12 verschiebbar ist. Bei geringer Dichte des abgelegten Materials eignet sich eine Dichtemessung. Weist das abgelegte Material hingegen eine hohe Dichte auf, eignet sich auch eine Dickenmessung. Eine Dichtemessung kann beispielsweise dadurch erfolgen, dass man das Material durchstrahlt und den Grad der Absorption feststellt.

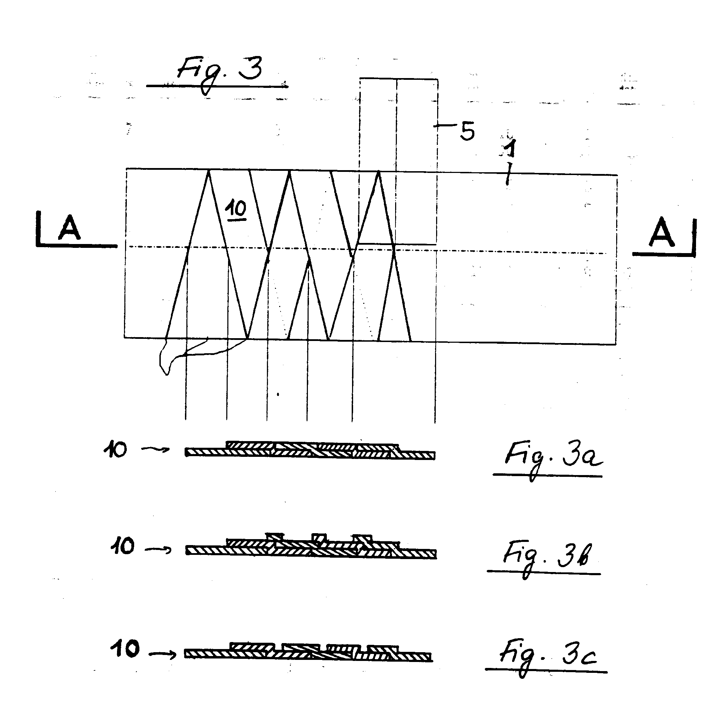

Sind die Geschwindigkeiten v1 und v2, die Breite b1 der zugeführten Bahn 9 und der Hub der Ablegewalze 6 optimal aufeinander abgestimmt und eingestellt, dann werden die sich überlappenden Bahnen auf dem Abzugsband 1 exakt gestoßen und es entsteht eine gleichmässig dicke, mehrlagige Bahn 10. Figur 3 zeigt dies am Beispiel einer zweilagigen Bahn 10, wobei die Lagen längs der Linie A-A geschnitten sind. Bei optimaler Einstellung ergibt sich das Erscheinungsbild wie in Figur 3a, bei einer fehlerhaften Einstellung kann es zur Überlappung (Fig. 3b) oder zur Unterlappung (Fig. 3c) kommen . Einer Überlappung kann man dadurch begegnen, dass man die Geschwindigkeit v2 des Abzugsbandes erhöht, einer Unterlappung kann man durch Verminderung der Geschwindigkeit v2 des Abzugsbandes entgegenwirken. Man könnte jedoch stattdessen auch die Geschwindigkeit, mit welcher die einlagige Bahn 9 zugeführt wird erniedrigen, um eine Überlappung zu beseitigen, oder erhöhen, um eine Unterlappung zu beseitigen. Zugleich kann durch Verschieben der Meßeinrichtung 11 festgestellt werden ob die mehrlagige Bahn 10 die gewünschte Breite hat. Wenn nicht, kann der Hub der Ablegewalze 6 entsprechend verändert werden.

Im einfachsten Falle kann die Meßeinrichtung 11 ortsfest angeordnet sein. In diesem Fall wird lediglich die Lage 10 unter der Meßeinrichtung entlangbewegt und es können mehrere Zyklen ausgewertet werden. Bewegt man stattdessen die Meßeinrichtung quer zur Laufrichtung 4 des Abzugsbandes 1, dann können höchstens soviele Zyklen gemessen und ausgewertet werden, wie die Bahn 10 Lagen hat. Darüberhinaus ist es möglich, an der Schiene 12 nebeneinander mehrere Meßeinrichtungen 11 vorzusehen, welche die mehrlagige Bahn 10 an mehreren Stellen zugleich abtasten.

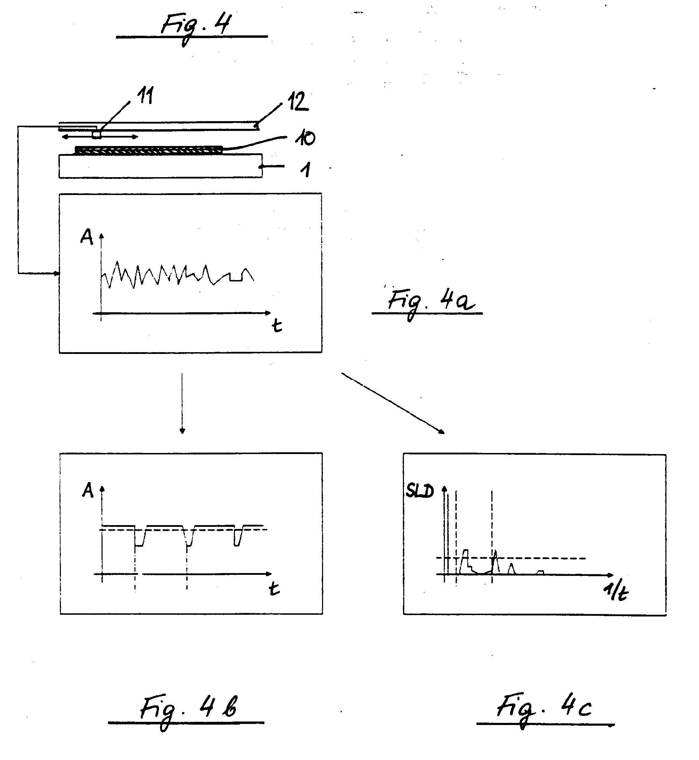

Die Meßeinrichtung 11 liefert ein analoges oder digitales Ausgangssignal, welches nicht nur eventuelle Legefehler enthält, sondern auch Dichteschwankungen und/oder Dickenschwankungen wiederspiegelt, die bereits im Ausgangsmaterial in der Bahn 9 enthalten sind. Das Ausgangssignal ist deshalb stark verrauscht. Ein Beispiel eines solchen Ausgangssignales ist in Figur 4a dargestellt; es zeigt die Amplitude A des Ausgangssignales in Abhängigkeit von der Zeit t. Um dieses Signal auswerten zu können, wird es maschinell aufbereitet. Dazu kann man es einer Tiefpaßfilterung unterwerfen, die höherfrequente Signalanteile, welche nicht von Legefehlern herrühren, unterdrückt, so dass die von Legefehlern herrührenden niederfrequenten Signalanteile deutlicher hervortreten. Ein solches gefiltertes Signal ist in idealisierter Form in Figur 4b dargestellt. Praktisch ist das gefilterte Signal natürlich nicht so glatt. Man sieht, dass die Amplitude des gefilterten Signales in periodischen Abständen deutlich abfällt. Dieser Abfall rührt von einem Legefehler her. Eine andere, besonders vorteilhafte Möglichkeit besteht darin, das Ausgangssignal einer Fouriertransformation zu unterwerfen. Man erhält dann ein Spektrum, welches beispielsweise wie in Fig. 4c dargestellt aussehen kann. Angegeben ist die spektrale Leistungsdichte SLD in Abhängigkeit von der Frequenz.

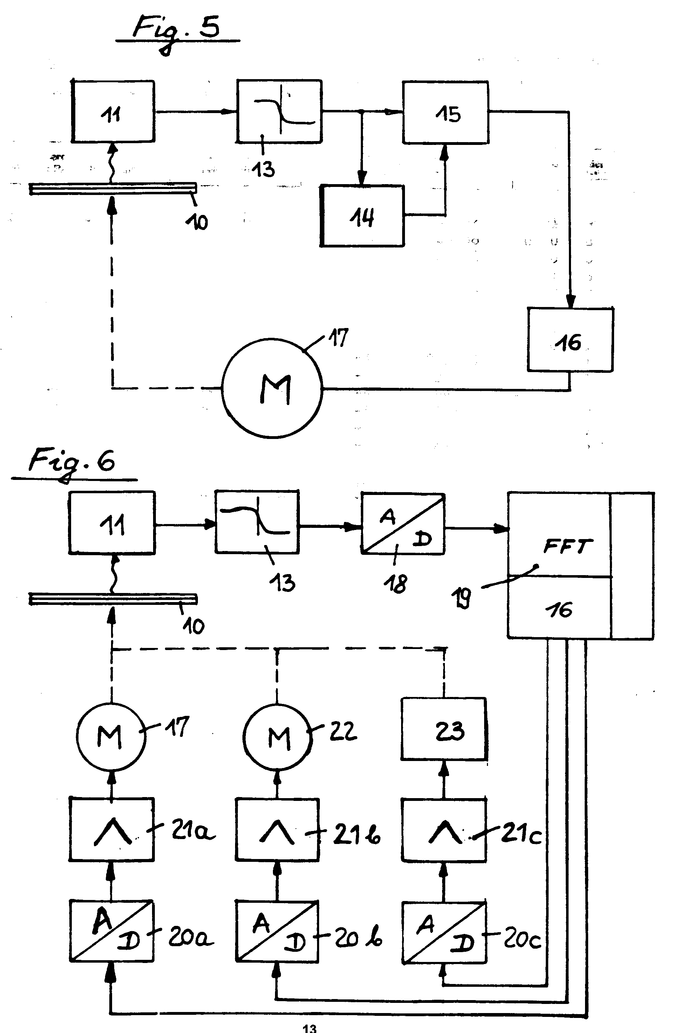

Die Auswertung des gefilterten Ausgangssignales gemäß Figur 4b kann in einem Regelkreis erfolgen, von dem ein Beispiel in Figur 5 dargestellt ist. Der Regelkreis enthält die folgenden Elemente: Eine Meßeinrichtung 11, welche die Dicke oder die Masse pro Flächeneinheit der mehrlagigen Bahn 10 mißt und ein entsprechendes analoges Ausgangssignal abgibt an ein Tiefpaßfilter 13, das auch als digitales Filter ausgebildet sein könnte. Für das oben angegebene Zahlenbeispiel für ein aus vier Doppellagen bestehendes Vlies kann man ein Tiefpaßfilter mit einer Grenzfrequenz von 1 Hz verwenden, denn in dem aus der Überwachung dieses Vlieses sich ergebenden Ausgangssignal findet man eine Grundfrequenz von 0,09 Hz. Das vom Tiefpaßfilter angegebene, vom höherfrequenten Anteil befreite, Ausgangssignal wird zum einen direkt und zum anderen über einen Integrator 14, welcher einen Mittelwert der Signalamplitude bildet, einem Vergleicher 15 zugeführt. Der Vergleicher vergleicht die aktuelle Amplitude des Signales mit dem Mittelwert der Amplitude und führt deren Differenz einem Regler 16 als Regelgröße zu, der dann, wenn diese Differenz einen gewissen Schwellenwert überschreitet, als Stellgröße ein Signal an den Motor 17 abgibt, welcher die vordere Walze 2 des Abzugsbandes 1 antreibt. Der Regler 16 wählt die Stellgröße so, dass die Differenz zwischen der aktuellen Amplitude und ihrem Mittelwert zu einem Minimum wird. Dementsprechend wird ein Abfall der Amplitude, der die gestrichelte Linie in Figur 4b nicht unterschreitet, vom Regler 16 nicht mehr korrigiert werden.

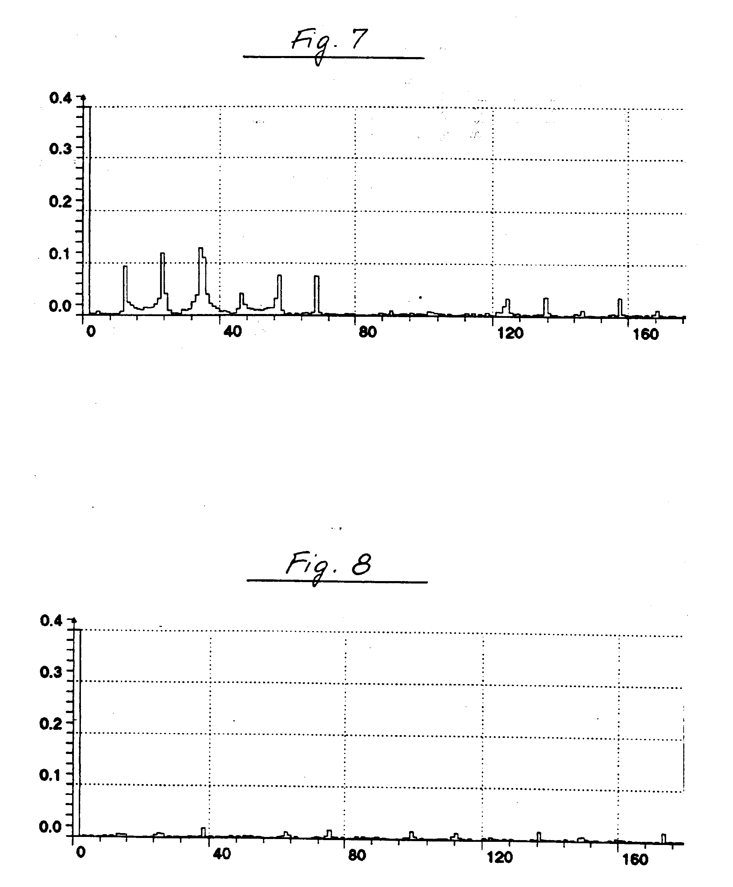

Figur 6 zeigt ein Beispiel eines Regelkreises für den bevorzugten Fall, das das Ausgangssignal der Meßeinrichtung 11 einer Fouriertransformation unterworfen wird. Dieser Regelkreis hat folgende Elemente: Das analoge Ausgangssignal der Meßeinrichtung 11 wird zunächst einem Tiefpaßfilter 13 zugeführt, welches das Signal von den hochfrequenten Anteilen befreit. Dieses Tiefpaßfilter ist zwar vorteilhaft, aber nicht unbedingt notwendig. Das Ausgangssignal des Tiefpaßfilters 13 wird dann einem Analog-Digital-Wandler 18 zugeführt, der es digitalisiert und einem Mikrocomputer 19 eingibt. In diesem Mikrocomputer 19 wird das Signal einer schnellen Fouriertransformation (FFT) unterzogen. Es entsteht dabei ein Linienspektrum, wie es beispielsweise in dem Diagramm in Figur 7 dargestellt ist, welches die spektrale Leistungsdichte in Abhängigkeit von der Frequenz in relativen Einheiten zeigt, also angibt, wie stark eine bestimmte Frequenz im Signal vertreten ist. Man sieht, dass die mit einer Periodizität auftretenden Legefehler auffällig aus dem Rauschanteil des Spektrums hervorstechen. Die spektrale Leistungsdichte wird einem im Mikrocomputer ausgebildeten digitalen Regler als Regelgröße zugeführt. Der Regler 16 gibt als Stellgröße ein digitales Signal ab, welches durch einen Digital-Analog-Wandler 20a bzw. 20b bzw. 20c in eine analoge Form überführt, durch einen Verstärker 21a bzw. 21b bzw. 21c verstärkt und dann dem Motor 17, der die vordere Walze 2 des Abzugsbandes 1 antreibt, bzw. dem Motor 22, der die Ablegewalze 6 antreibt, oder dem Stellantrieb 23 für das Verschieben der Ablegewalze 6 zugeführt wird. Es ist aber auch ein digitaler Ausgang möglich, z.B. bei Einsatz eines AC-Servoreglers mit digitalem Sollwerteingang. Der Regler 16 wählt die Stellgröße so, dass die spektrale Leistungsdichte - ausgenommen bei der Frequenz 0 - minimiert wird.

Figur 8 zeigt das Spektrum für eine optimale Einstellung der Legemaschine nach erfolgreicher Regelung. Bevorzugt wird der Regler 16 die Geschwindigkeit v2 des Abzugsbandes 1 und nur subsidiär die Geschwindigkeit v1 des Förderbandes 5 regeln, letztere insbesondere dann, wenn die Breite b2 zu korrigieren ist, in welcher der Vlies auf dem Abzugsband 1 abgelegt wird.

Ein solcher digitaler Regler kann die den Legevorgang bestimmenden Parameter nahezu on-line regeln, denn die Dauer, die der Mikrocomputer 19 für eine schnelle Fouriertransformation benötigt, liegt nur im Bereich von Mikrosekunden.

Es hat sich gezeigt, dass in Anwendung des erfindungsgemäßen Verfahrens in der Tat mit geringem Aufwand ein hohes Maß an Gleichmässigkeit der mehrlagigen Vliesbahn 10 erreichbar ist. Der sich daraus ergebende wirtschaftliche Vorteil ist enorm, denn es wird nicht nur die Produktion von Ausschuß bei der Vliesherstellung vermieden, sondern auch bei der Papierherstellung. Ausserdem kann Bedienungspersonal an der Legemaschine eingespart werden, welches bislang für die Einstellung und Nachstellung der den Legevorgang bestimmenden Parameter erforderlich war.

Ein weiterer Vorteil liegt darin, dass durch Aufzeichnen der Meßergebnisse und ihrer Auswertung der gesamte Produktions-ablauf und z.B. als Gütebeweis dem Abnehmer des Vlieses mitgeliefert werden kann.

## Patentansprüche

1. Verfahren zum Erfassen und Ausgleichen von Legefehlern beim Herstellen einer Bahn eines mehrlagigen Vlieses mittels einer Legemaschine, in welcher eine Bahn eines einlagigen Vlieses einem auch als Abzugsband bezeichneten Förderband quer zu dessen Laufrichtung zugeführt und hin- und hergehend darauf abgelegt wird, so dass eine mehrlagige Bahn gebildet wird, wobei die Dicke des mehrlagigen Vlieses und/oder seine Masse pro Flächeneinheit fortlaufend gemessen und ein die Dicke und/oder seine Masse pro Flächeneinheit wiedergebendes Meßsignal gebildet werden,
**dadurch gekennzeichnet,** dass das Meßsignal maschinell auf Störungen in Gestalt von periodisch auftretenden Schwankungen seiner Signalamplitude infolge von Unterlappung oder Überlappung der Lagen des Vlieses untersucht und die Geschwindigkeit des Förderbandes und/oder die Geschwindigkeit, mit der die einlagige Vliesbahn zugeführt wird, und/oder die Breite, in welcher die einlagige Vliesbahn zugeführt wird und/oder die Breite, in der es auf dem Förderband abgelegt wird, so geregelt werden, dass die periodischen Schwankungen der Signalamplitude minimiert werden.

2. Verfahren nach Anspruch 1, **dadurch gekennzeichnet,** dass das Meßsignal zur Ermittlung der periodischen Störungen nach Frequenzen analysiert wird.

3. Verfahren nach Anspruch 2, **dadurch gekennzeichnet,** dass das Meßsignal einer Fouriertransformation unterworfen und das dadurch erhaltene Frequenzspektrum auf auffällig stark vertretene Frequenzen untersucht und deren Auftreten durch die Regelung minimiert wird.

4. Verfahren nach einem der vorstehenden Ansprüche, **dadurch** **gekennzeichnet,** dass nur ein die periodischen Störungen enthaltender niederfrequenter Anteil des Meßsignals untersucht wird.

5. Verfahren nach Anspruch 4, **dadurch gekennzeichnet,** dass die hohen Frequenzen aus dem Meßsignal vor dessen Untersuchung ausgefiltert werden.

6. Verfahren nach einem der vorstehenden Ansprüche, **dadurch** **gekennzeichnet,** dass die Dicke und/oder Masse pro Flächeneinheit des Vlieses - bezogen auf dessen Laufrichtung - an mehreren Stellen nebeneinander gleichzeitig gemessen und ausgewertet wird.

7. Legemaschine mit einer Einrichtung zum Erfassen und Ausgleichen von Legefehlern zum Ausführen des Verfahrens nach Anspruch 1,
mit einem Förderband (5) zum Zuführen einer Bahn (9) eines einlagigen Vlieses, welches (5) an seinem **vorderen Ende um eine** walze (6) - nachfolgend als Ablegewalze bezeichnet umgelenkt ist,
mit einem Motor (22) zum Antreiben des Förderbandes (5), mit einem Verschiebeantrieb (23) zum hin- und hergehenden Verschieben der Ablegewalze (6) in bzw. entgegen der Förderrichtung (8) des Förderbandes (5),
mit einem unterhalb der Ablegewalze (6) angeordneten und quer zum Förderband (5) verlaufenden Abzugsband (1),
mit einem Motor (17) zum Antreiben des Abzugsbandes (1),
und mit einer Meßeinrichtung (11) zur Messung der Dicke und/oder der Masse pro Flächeneinheit der mehrlagigen Vliesbahn (10),
**dadurch gekennzeichnet,** dass ein Analysator (13 bis 15 bzw. 19) vorgesehen ist, dem das Ausgangssignal der Meßeinrichtung (11) zugeführt wird und der das Ausgangssignal auf darin enthaltene, periodisch auftretende Signalanteile untersucht,
dass ein Regler (16) vorgesehen ist, welcher mit dem Motor (22) zum Antreiben des Förderbandes (5) und/oder mit dem Verschiebe- antrieb (23) der Ablegewalze (6) und/oder mit dem Motor (17) zum Antreiben des Abzugsbandes (1) als Stellglieder verbunden ist und welchem vom Analysator (13 bis 15; 19) als Regelgröße die zu minimierende Amplitude der periodisch auftretenden Signalanteile zugeführt wird.

8. Legemaschine nach Anspruch 7, **dadurch gekennzeichnet,** dass der Meßeinrichtung (12) ein Tiefpaßfilter (13) nachgeordnet ist.

9. Legemaschine nach Anspruch 7 oder 8, **dadurch gekennzeichnet**, dass der Analysator (19) ein Frequenzanalysator ist.

10. Legemaschine nach Anspruch 9, **dadurch gekennzeichnet** dass der Frequenzanalysator (19) ein Rechner ist.

11. Legemaschine nach Anspruch 9, **dadurch gekennzeichnet**, dass als Meßeinrichtung (11) eine solche mit analogem Ausgangssignal vorgesehen und zwischen ihr und dem Frequenzanalysator (19) ein Analog-Digital-Wandler (18) angeordnet ist.

## Claims

1. A process of detecting and correcting folding errors occurring during the manufacture of a web consisting of a multilayer non-woven fabric by means of a laying machine in which a web consisting of a monolayer non-woven fabric is supplied to a conveyor belt which is also called a delivering belt transversely to the direction of travel of said belt and is laid onto said belt by a reciprocating motion to form a multilayer web and the thickness of the multilayer non-woven fabric and/or its mass per unit of area is continually measured and a measured-value signal is formed representing the thickness and/or the mass per unit of area of said multilayer non-woven fabric,
characterized in that the measured-value signal is analyzed by machine for errors consisting of periodically occurring fluctuations of the signal amplitude resulting from an underlap or from an overlap of the layers of said non-woven fabric and the velocity of the conveyor belt and/or the velocity at which the monolayer non-woven web is supplied and/or the width in which the monolayer non-woven web is laid onto the delivering belt are so controlled that the periodic fluctuations of the signal amplitude are minimized.

2. A process according to claim 1, characterized in that the measured-value signal is analyzed in terms of frequency in order to determine the periodic disturbances.

3. A process according to claim 2, characterized in that the measured-value signal is subjected to a Fourier transformation, and that the frequency spectrum thus obtained is analyzed for conspiceously strongly occurring frequencies and the occurrence of such frequencies is minimized by said control.

4. A process according to any of the preceding claims, characterized in that a low frequency portion, only, of the measured-value signal is being analyzed, said portion including the said periodic disturbancies.

5. A process according to claim 4, characterized in that the high frequencies are removed by filtering from the measured-value signal before it is analyzed.

6. A process according to any of the preceding claims, characterized in that the thickness and/or the mass per unit of area of the non-woven fabric at a plurality of locations which are juxtaposed transverse to the direction of travel of the non-woven fabric are synchronously measured and evaluated.

7. A laying machine comprising an apparatus for detecting and correcting position errors and performing the process according to claim 1,
a conveyor belt (5) to supply a web (9) consisting of a monolayer non-woven fabric and being deflected at its leading end around a roller (6) hereinafter called a laying roller
a motor (22) for driving the conveyor belt (5),
a traversing drive (23) for reciprocatively displacing the laying roller (6) in and opposite to said direction of conveyance (8), resp.,
a delivering belt (1), which is disposed below the laying roller (6) and extends transversely to the conveyor belt (5), a motor (17) for driving the delivering belt (1),
and a measuring device (11) for measuring the thickness and/or the mass per unit of area of the multilayer non-woven web (10),
characterized in that an analyzer (13 to 15 and/or 19) is provided, to which the output signal of the measuring device (11) is supplied and which analyzes the output signal for periodically occurring signal portions contained therein,
and a controller (16) is provided, which is connected to final control elements consisting of the motor (22) for driving the conveyor belt (5) and/or of the traversing drive (23) for the laying roller (6) and/or of the motor (17) for driging the delivering belt (1) and to which is fed from the analyzer (13 to 15; 19) a controllable variable consisting of the amplitude of the periodically occurring signal portions, which amplitude is to be minimized.

8. A laying machine according to claim 7, characterized in that the measuring device (12) is succeeded by a low-pass filter (13).

9. A laying machine according to claim 7 or 8, characterized in that the analyzer (19) is a frequency analyzer.

10. A laying machine according to claim 9, characterized in that the frequency analyzer (19) is a computer.

11. A laying machine according to claim 9, characterized in that the measuring device (11) generates an analog output signal and an analog-to-digital converter (18) is provided between the measuring device and the frequency analyzer (19).

## Revendications

1. Procédé de détection et de correction d'erreurs de pliage lors de la production d'une bande de non-tissé à couches multiples au moyen d'une machine de pliage, dans laquelle une bande d'un non-tissé en une seule couche est amenée à une bande transporteuse - appelée aussi bande d'évacuation - transversalement au sens de marche et est déposée en va-et-vient sur celle-ci de manière à former une bande à couches multiples, l'épaisseur du non-tissé à couches multiples et/ou sa masse par unité de surface étant mesurée en continu et un signal de mesure représentatif de l'épaisseur et/ou de sa masse par unité de surface étant formé,
caractérisé en ce que le signal de mesure est analysé par la machine en ce qui concerne les perturbations de son amplitude de signal, présentes sous forme d'oscillations se produisant périodiquement, par suite du découvrement ou du recouvrement des couches du non-tissé et on règle la vitesse de la bande d'alimentation et/ou la vitesse d'amenée du non-tissé en une seule couche et/ou la largeur dans laquelle le non-tissé en une seule couche est amenée et/ou la largeur avec laquelle il est déposé sur la bande transporteuse, de telle sorte que les oscillations périodiques de l'amplitude du signal sont minimisées.

2. Procédé selon la revendication 1, caractérisé en ce que le signal de mesure est analysé pour la détermination des perturbations périodiques d'après les fréquences.

3. Procédé selon la revendication 2, caractérisé en ce que le signal de mesure est soumis à une transformation de Fourier et le spectre de fréquence ainsi obtenu est analysé en ce qui concerne les fréquences singulières fortement représentées et leur apparition est minimisée par le réglage.

4. Procédé selon l'une des revendications précédentes, caractérisé en ce que seule une portion à basse fréquence du signal de mesure contenant les perturbations périodiques est analysée.

5. Procédé selon la revendication 4, caractérisé en ce que les fréquences élevées provenant du signal de mesure sont filtrées avant son analyse.

6. Procédé selon l'une des revendications précédentes, caractérisé en ce que l'épaisseur et/ou la masse par unité de surface du non-tissé - calculée par rapport à son sens de marche - est mesurée simultanément en plusieurs endroits adjacents et est corrigée.

7. Machine de pliage munie d'un dispositif de détection et de correction d'erreurs de pliage pour la mise en oeuvre du procédé selon la revendication 1, comprenant :
- une bande transporteuse (5) pour l'amenée d'une bande (9) d'un non-tissé en une seule couche, laquelle (5) est déviée à son extrémité avant autour d'un rouleau (6) - ci-après appelé rouleau de pliage-,
- un moteur (22) pour l'entraînement de la bande transporteuse (5),
- une commande en translation (23) pour le déplacement en va-et-vient du rouleau de pliage (6) dans ou à l'encontre du sens d'alimentation (8) de la bande transporteuse (5),
- une bande d'évacuation (1) prévue en dessous du rouleau de pliage (6) et s'étendant transversalement à la bande transporteuse (5),
- un moteur (17) pour l'entraînement de la bande d'évacuation (1), et
- un dispositif de mesure (11) pour la mesure de l'épaisseur et/ou de la masse par unité de surface de la bande de non-tissé en couches multiples (10),
caractérisée en ce qu'il est prévu un analyseur (13, 15 ou 19) auquel est amené le signal de sortie du dispositif de mesure (11) et qui analyse les portions de signal contenues dans celui-ci et se produisant de façon périodique,
en ce qu'il est prévu un correcteur (16) qui est relié, en tant qu'organe de réglage, au moteur (22) pour l'entraînement de la bande transporteuse (5) et à la commande en translation (23) du rouleau de pliage (6) et/ou au moteur (17) pour l'entraînement de la bande d'évacuation (1), et auquel est amenée, à partir de l'analyseur (13 à 15; 19), en tant que grandeur de réglage, l'amplitude à minimiser des parties de signal se présentant de façon périodique.

8. Machine de pliage selon la revendication 7, caractérisée en ce qu'un filtre passe-bas (13) est relié au dispositif de mesure (12).

9. Machine de pliage selon la revendication 7 ou 8, caractérisé en ce que l'analyseur (19) est un analyseur de fréquence.

10. Machine de pliage selon la revendication 9, caractérisée en ce que l'analyseur de fréquence (19) est un calculateur.

11. Machine de pliage selon la revendication 9, caractérisée en ce qu'il est prévu, en tant que dispositif de mesure (11), un dispositif à signal de sortie analogique et en ce qu'il est prévu un convertisseur analogique-numérique (18) entre celui-ci et l'analyseur de fréquence (19).
